# FASCICULE DE BREVET EUROPEEN

(11) **EP 1 703 962 B1**
(45) Date de publication et mention de la délivrance du brevet: **15.04.2009**
(21) Numéro de dépôt: 04817595.4
(22) Date de dépôt: 24.12.2004
(51) Int. Cl.: B01D 53/32, B01D 53/04

(54) **PROCEDE ET DISPOSITIF DE TRAITEMENT DE FUMEES GENEREES AU COURS DE LA FABRICATION, TRANSFORMATION ET/OU MANIPULATION DE PRODUITS D'ORIGINE PETROLIERE**
VERFAHREN UND VORRICHTUNG ZUR BEHANDLUNG VON BEI DER HERSTELLUNG, UMWANDLUNG UND/ODER HANDHABUNG VON PRODUKTEN AUF ÖLBASIS GEBILDETEN DÄMPFEN
METHOD AND DEVICE FOR TREATING FUMES GENERATED DURING THE PRODUCTION, CONVERSION AND/OR HANDLING OF OIL-BASED PRODUCTS

(30) Priorité: 26.12.2003 FR 0315457
(43) Date de publication de la demande: 27.09.2006
(73) Titulaire: Eurovia, 92500 Rueil-Malmaison (FR)
(72) Inventeur: MAZE, Michel, F-33000 Bordeaux (FR); MARCHAND, Jean-Pierre, F-78360 Montesson (FR); AMOUROUX, Jacques, c/o Ecole Nationale Supérieure, F-75005 paris (FR); DRESVIN, Sergey, 194021 SAINT PETERSBOURS (RU); ROUSSEAU, Pascal, F-33000 Bordeaux (FR)
(74) Mandataire: Ahner, Francis
(86) Numéro de dépôt international: PCT/FR2004/003382
(87) Numéro de publication internationale: WO 2005/068054

(56) Documents cités:
- WO-A-90/06181
- WO-A-99/12638
- GB-A- 799 625
- US-A- 5 240 575
- US-A- 5 843 288
- US-A- 6 132 692
- US-A1- 2003 170 154

## Description

La présente invention concerne le domaine technique général du traitement de fumées provenant de produits d'origine pétrolière.

En particulier, la présente invention concerne un procédé de traitement de fumées générées au cours de la fabrication, transformation et/ou manipulation de produits d'origine pétrolière portés à chaud, avantageusement à une température supérieure ou égale à 50°C sous pression atmosphérique, tels que des hydrocarbures, des bitumes et des enrobés bitumineux. L'invention a également pour objet un dispositif de traitement de fumées générées au cours de la fabrication, transformation et/ou manipulation de produits d'origine pétrolière portés à chaud, convenant à la mise en oeuvre du procédé. La présente invention concerne également l'utilisation dudit procédé ou dudit dispositif dans la préparation d'un granulat entrant dans la fabrication d'un produit routier, tel qu'un enrobé ou un enrobé bitumineux.

La fabrication, la transformation, la manipulation et/ou le transport de produits d'origine pétrolière, tels que les produits hydrocarbonés, conduisent à l'émission de composés organiques volatils (COV).

Dans le cadre de l'industrie de produits d'origine pétrolière, du type produits bitumineux, les principales sources d'émission des COV sont les usines de fabrication de liants hydrocarbonés (cuves de stockage, malaxeurs et postes de chargement de bitume), les centrales d'enrobage (cuves de stockage, bascules à bitume, vidanges du malaxeur, transferts des produits bitumineux), ainsi que les chantiers de produits bitumineux (répandeuse : répandage du liant, et finisseur : déchargement du camion d'enrobés dans la trémie). Les émissions de COV (principalement des alcanes, alcènes, et hydrocarbures aromatiques) sont issues de la décomposition des asphaltènes, des hydrocarbures paraffiniques et des composés cycliques soufrés, et sont le principal résultat des réactions gaz-liquide et liquide-solide qui se traduisent par des émissions de composés chimiques complexes.

Afin de se conformer aux dispositions réglementaires et environnementales à venir, le traitement des COV constitue l'un des grands défis à relever, notamment dans le domaine du traitement des rejets de produits d'origine pétrolière.

De nombreux procédés de traitement des COV ont été développés jusqu'alors. De nos jours, les principales techniques de traitement des COV sont l'adsorption (sur charbon actif en grain, sur tissu de charbon actif ou sur d'autres adsorbants), l'absorption (par lavage à l'eau, à l'huile ou autres absorbants), l'oxydation thermique ou les voies biologiques.

Néanmoins, si ces techniques sont particulièrement adaptées pour le traitement de débits d'air relativement faibles, chargés en COV à forte concentration, celles-ci restent inefficaces pour le traitement d'effluents à débits élevés avec de très faibles concentrations de COV (de l'ordre de 100 à 1000 ppm), ou pour le traitement d'effluents de nature complexe, chargés en impuretés, comme c'est le cas pour les COV provenant de produits d'origine pétrolière. En outre, l'adsorption sur charbon actif ne permet pas un traitement exhaustif de toutes les espèces moléculaires incluses dans les fumées (adsorption sélective). Par ailleurs, les procédés et dispositifs de traitement de COV de l'art antérieur mentionnés ci-dessus sont généralement coûteux et restent encore en inadéquation avec les forts débits gazeux d'un grand nombre d'unités industrielles. En particulier, la technique par adsorption sur charbon actif implique des coûts et des moyens de régénération et de revalorisation importants des matériaux de piégeage.

Le document US-A-5 843 288 décrit un procédé et un dispositif pour la destruction des composant toxiques contenus dans des gaz résiduaires provenant de l'industrie chimique.

Par conséquent, il existait ainsi un besoin, notamment dans le domaine du traitement des produits d'origine pétrolière, du type bitumineux, de mettre au point un procédé de traitement de fumées générées au cours de la fabrication, transformation et/ou manipulation de produits d'origine pétrolière chauffés ne présentant pas les inconvénients des procédés de l'art antérieur.

La présente invention vient combler ce besoin. La Demanderesse a ainsi découvert un nouveau procédé de traitement de fumées générées au cours de la fabrication, transformation et/ou manipulation de produits d'origine pétrolière portés à chaud, permettant de traiter efficacement les COV de natures diverses, avec un rendement élevé, sans engendrer d'importantes nuisances olfactives, permettant de se conformer aux dispositions réglementaires et environnementales actuelles européennes et d'anticiper celles à venir, et permettant d'assurer éventuellement un recyclage des différents matériaux utilisés. Le procédé selon la présente invention permet ainsi également d'assurer un recyclage des matériaux granulaires qui permettent le piégeage des produits réactionnels générés dans le réacteur de traitement, lorsque le dispositif de piégeage desdits produits comprend un lit fluidisé de matériaux granulaires.

Par ailleurs, le procédé selon la présente invention permet le traitement performant des COV, car il comporte plusieurs niveaux de traitement. Le procédé permet ainsi d'assurer une modification chimique des composants de fumées à traiter par oxydation due aux espèces actives formées dans le réacteur plasma hors équilibre (ozone, oxygènes moléculaires et atomiques excités). Le procédé selon la présente invention permet ensuite de piéger les produits réactionnels générés dans le réacteur à partir des entités radicalaires à l'aide d'au moins un dispositif de piégeage approprié. Enfin, le procédé selon la présente invention dispose avantageusement d'un moyen d'introduction des fumées par effet Venturi. Celui-ci permet de modifier la vitesse des gaz à traiter et d'assurer, par la zone dépressionnaire, le mélange des fumées avec les gaz de la décharge diélectrique au sein du réacteur. Le procédé protège ainsi la zone de la décharge diélectrique d'éventuels dépôts et assure le mélangeage nécessaire à la formation des radicaux.

La présente invention a ainsi pour objet un procédé de traitement de fumées générées au cours de la fabrication, transformation et/ou manipulation de produits d'origine pétrolière portés à chaud, tels que des hydrocarbures, des bitumes et des enrobés bitumineux, **caractérisé en ce qu**'il implique :
- l'introduction desdites fumées dans un réacteur où les composants de fumées subissent une dégradation radicalaire par plasma froid généré dans le réacteur par introduction d'air au travers au moins une barrière de décharge diélectrique agencée à proximité d'au moins une des parois du réacteur qui s'étendent parallèlement à la direction du flux des fumées traversant le réacteur, et
- la rétention des produits réactionnels générés dans le réacteur à partir des entités radicalaires résultant de la dégradation des composants de fumées, au moyen d'au moins un dispositif de piégeage approprié.

Dans un mode de réalisation particulier de la présente invention, l'introduction des fumées est réalisée par un courant vecteur d'air.

Avantageusement selon la présente invention, au moins une barrière de décharge diélectrique est agencée à au moins une des parois du réacteur qui s'étendent parallèlement à la direction du flux des fumées traversant le réacteur.

Dans un mode de réalisation particulier de la présente invention, au moins une barrière de décharge diélectrique est présente à proximité de chaque paroi latérale du réacteur.

Avantageusement selon la présente invention, au moins une barrière de décharge diélectrique est agencée à chaque paroi latérale du réacteur.

Selon une caractéristique particulière de la présente invention, le dispositif de piégeage comprend au moins un lit fluidisé d'un support avantageusement minéral.

Dans un exemple de réalisation particulier de la présente invention, ledit support est un matériau granulaire contenant avantageusement de l'alumine, de la silice, ou de la calcite. Dans un mode de réalisation particulier de la présente invention, ledit support est un matériau granulaire microporeux, tel que la zéolithe ou la pierre ponce. Dans un autre mode de réalisation particulier de la présente invention, ledit support est un matériau granulaire basique, tel que la pouzzolane ou une roche de type carbonate.

Selon une caractéristique particulière de la présente invention, la dimension dudit support est comprise entre 0,5 mm et 20 mm, avantageusement entre 1 mm et 10 mm.

Avantageusement selon la présente invention, le lit fluidisé est fixe ou circulant.

Dans un exemple de réalisation particulier de la présente invention, une autre barrière de décharge diélectrique se trouve au voisinage de la sortie du réacteur, avantageusement placée perpendiculairement à la direction du flux des fumées traversant le réacteur.

Dans un exemple de réalisation particulier, le procédé selon la présente invention comprend en outre, en sortie de réacteur, une étape de dégradation de l'ozone résiduel formé dans le réacteur par passage de l'air au travers de la (des) barrière(s) de décharge diélectrique.

Dans un exemple de réalisation particulier, le procédé selon la présente invention comprend en outre une recirculation, au moins partielle, des gaz purifiés situés dans le courant gazeux sortant du réacteur vers l'entrée du réacteur, en mélange avec les fumées à traiter.

La présente invention a également pour objet un dispositif de traitement de fumées générées au cours de la fabrication, transformation et/ou manipulation de produits d'origine pétrolière portés à chaud, tels que des hydrocarbures, des bitumes et des enrobés bitumineux, dans un réacteur (1) comprenant :
- au moins un système d'introduction (2) des fumées en partie basse du réacteur (1),
- au moins un organe de décharge diélectrique (3) en remplacement d'au moins une partie d'au moins une des parois du réacteur (1) qui s'étendent parallèlement à la direction du flux des fumées traversant le réacteur,
- au moins un système d'introduction d'air (4) au travers dudit (desdits) organe(s) de décharge diélectrique,
- au moins un dispositif de piégeage (5) approprié à la rétention des produits réactionnels générés dans le réacteur, et
- au moins une cheminée de sortie (6).

Dans un exemple de réalisation particulier de la présente invention, le système d'introduction (2) des fumées contient un Venturi (2').

Dans un mode de réalisation particulier de la présente invention, le ou les organe(s) (3) de décharge diélectrique est (sont) réalisé(s) sous la forme de cassettes modulables constituées chacune par une pluralité de tubes électriques parallèles (7), lesdits tubes électriques étant chacun constitués de fils électriques (8) gainés d'un isolant diélectrique (9) et alimentés par un générateur de haute tension.

Dans un mode de réalisation particulier de la présente invention, les fils électriques (8) sont en cuivre.

Dans un mode de réalisation particulier de la présente invention, l'isolant diélectrique (9) est en quartz, en céramique ou en verre.

Dans un exemple de réalisation particulier de la présente invention, le diamètre de la gaine d'isolant diélectrique (9) est compris entre 2 et 10 mm.

Selon une caractéristique particulière de la présente invention, l'espace compris entre les tubes électriques parallèles (7) est compris entre 1 et 2 mm.

Selon une caractéristique particulière de la présente invention, au moins un organe de décharge diélectrique (3) est présent en remplacement d'au moins une partie de chaque paroi latérale du réacteur (1), lesdits organes (3) étant avantageusement agencés selon une disposition en regard.

Avantageusement selon la présente invention, le dispositif de piégeage (5) comprend au moins un lit fluidisé d'un support avantageusement minéral.

Dans un exemple de réalisation particulier, le dispositif selon la présente invention comprend en outre au moins un moyen de filtrage (10, 11), en partie haute du réacteur (1), avant la cheminée de sortie (6).

Dans un exemple de réalisation particulier, le dispositif selon la présente invention comprend en outre au moins un organe (3) de décharge diélectrique, en partie haute du réacteur (1), avant la cheminée de sortie (6).

La présente invention a également pour objet l'utilisation du procédé ou du dispositif décrits ci-dessus, dans lesquels le dispositif de piégeage (5) comprend au moins un lit fluidisé de matériaux granulaires, dans la préparation d'un granulat entrant dans la fabrication d'un produit routier.

Dans un exemple de réalisation particulier, le produit routier est un enrobé ou un enrobé bitumineux.

Divers objets et avantages de la présente invention deviendront apparents pour l'homme du métier par le biais de références aux dessins illustratifs suivants :

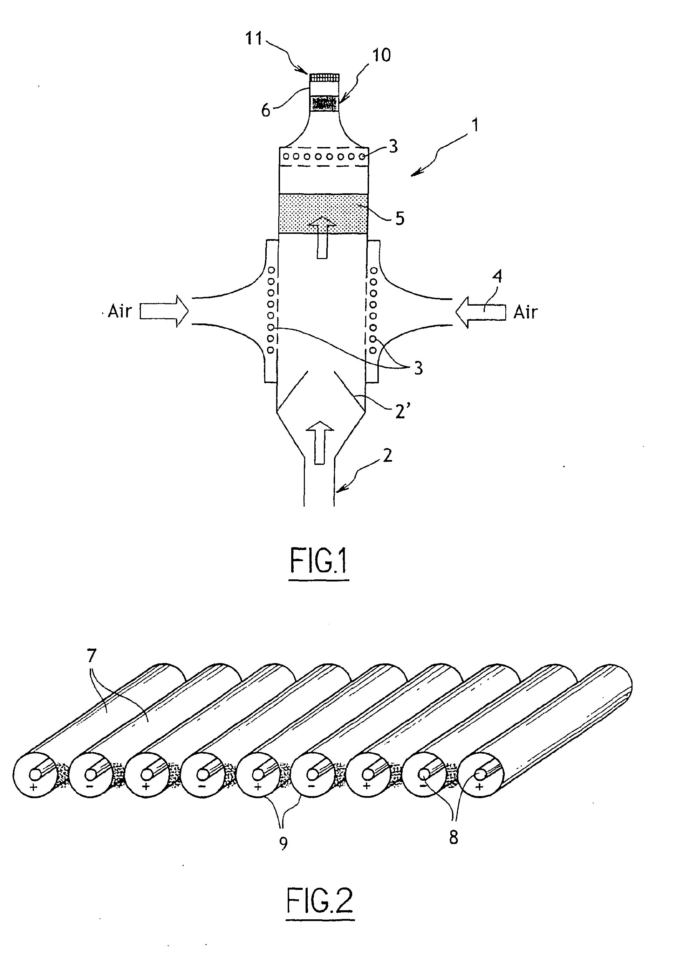

la figure 1 est une vue schématique en coupe d'un réacteur (1) de traitement de fumées issues de produits d'origine pétrolière selon un mode de réalisation de l'invention, qui comprend un système d'introduction (2) des fumées contenant un venturi (2'), au moins un organe de décharge diélectrique (3) agencé aux parois du réacteur (1), lesdits organes étant agencés selon une disposition en regard, un système d'introduction d'air (4) au travers de chacun des organes de décharge diélectrique, un lit fluidisé (5) de matériau granulaire situé au dessus de la zone où sont agencés les organes (3) de décharge diélectrique, un organe (3) de décharge diélectrique supplémentaire situé au dessus du lit fluidisé (5), deux moyens de filtrage (10, 11), et une cheminée de sortie (6).
la figure 2 est une vue schématique d'organes (3) de décharge diélectrique, selon un mode de réalisation de l'invention, sous forme de cassettes constituées chacune par une pluralité de tubes électriques parallèles (7), lesdits tubes électriques étant chacun constitués de fils électriques (8) gainés d'un isolant diélectrique (9) et alimentés par un générateur de haute tension.

Le procédé selon la présente invention permet de traiter efficacement divers types de composés organiques volatils (COV) issus de la fabrication, la transformation, la manipulation et/ou le transport de produits d'origine pétrolière, tels que les hydrocarbures, les bitumes, les enrobés bitumineux, ainsi que les fumées de fiouls notamment générées par des opérations de séchage de granulats.

Les fumées contenant les COV sont en général émises lorsque les produits d'origine pétrolière sont portés à chaud, avantageusement entre 50 et 250°C, plus particulièrement entre 50 et 180°C, encore plus avantageusement entre 100 et 180°C, sous pression atmosphérique. Les fumées apparaissent généralement lorsqu'il y a contact à chaud des produits d'origine pétrolière avec l'air ou avec un matériau à température ambiante. La température de dégagement des fumées dépend de la nature des produits d'origine pétrolière traités. Ainsi, typiquement, on observe un dégagement de fumées à partir de 50°C pour les bitumes époxy, et aux alentours de 250°C pour les enrobés coulés à chaud, du type asphaltes coulés ou « gußasphalts » d'Allemagne.

Les fumées à traiter sont en général introduites en partie basse du réacteur, de préférence à la base du réacteur. Avantageusement selon l'invention, l'introduction des fumées est réalisée par un courant vecteur d'air. L'introduction des fumées est ainsi réalisée par aspiration dans le réacteur, avec le flux d'air d'aspiration nécessaire à leur transfert. Une dépression est ainsi créée au niveau du système d'introduction des fumées, notamment à l'aide d'un effet Venturi ou d'un ventilateur. L'effet Venturi est avantageusement créé à l'aide de chicanes, de préférence placées au niveau du système d'introduction des fumées ou à proximité du système d'introduction des fumées. Les fumées à traiter entrent ainsi en contact et sont mélangées avec les espèces actives de la décharge diélectrique.

Le procédé selon la présente invention permet tout d'abord d'assurer une modification chimique des composants de fumées à traiter par les espèces produites par la décharge dans le réacteur par passage de l'air au travers de la (des) barrière(s) de décharge diélectrique. Les espèces actives de la décharge, dont l'ozone et les espèces oxygénées excitées, permettent de favoriser la combustion des espèces les plus légères à traiter et la dégradation radicalaire des espèces les plus lourdes. L'oxygène excité (oxygène atomique, moléculaire) et l'ozone, qui sont des oxydants puissants, permettent de favoriser la réactivité du milieu, et l'oxydation permet ainsi de provoquer la fragmentation des hydrocarbures les plus lourds. En général, les radicaux formés mènent à une polymérisation des molécules organiques radicalaires, et la polymérisation s'effectue généralement sur le dispositif de piégeage.

Avantageusement selon la présente invention, la zone dépressionnaire créée par effet Venturi au niveau du système d'introduction des fumées en partie basse du réacteur permet l'introduction directe d'air atmosphérique dans le réacteur au travers de la (des) barrière(s) de décharge diélectrique. Des dispositifs d'injection d'air complémentaires peuvent être éventuellement agencés au voisinage des parois extérieures du réacteur, pour assurer des passages d'air au travers de la (des) barrière(s) de décharge diélectrique. L'introduction d'air peut ainsi éventuellement être forcée par un compresseur ou une soufflante dans le flux ascendant de l'effluent à traiter.

Au moins une barrière de décharge diélectrique est présente à proximité d'au moins une des parois du réacteur selon la présente invention, et avantageusement à proximité de chaque paroi latérale du réacteur. Les barrières de décharge diélectrique sont avantageusement présentes à proximité immédiate des parois latérales du réacteur, ou peuvent même être agencées au niveau des parois ou sur les parois du réacteur. Les barrières de décharge diélectrique peuvent également se trouver à proximité plus éloignée des parois latérales du réacteur.

Selon un mode de réalisation préféré de l'invention, le (les) organes(s) de décharge diélectrique (3) remplace(nt) au moins une partie de la (des) paroi(s) du réacteur. Selon un autre mode de réalisation préféré de l'invention, le (les) organes(s) de décharge diélectrique (3) remplace(nt) la (les) paroi(s) latérale(s) du réacteur. Un trou est ainsi formé dans la (les) paroi(s) ou dans au moins une partie de la (des) paroi(s) pour pouvoir insérer le (les) organes(s) de décharge diélectrique (3) dans ladite (lesdites) paroi(s). Dans un exemple de réalisation de la présente invention, plusieurs barrières de décharge diélectrique peuvent se trouver sur chaque paroi du réacteur ou à la place de chaque paroi du réacteur. Dans ce cas, les barrières de décharge diélectrique sont avantageusement situées les unes au-dessus des autres sur chaque paroi ou les unes derrière les autres.

Après modification chimique des composants de fumées à traiter par les espèces actives de la décharges telles que l'ozone, le procédé selon la présente invention permet de retenir les produits réactionnels générés dans le réacteur à partir des entités radicalaires résultant de la dégradation des composés de fumées, au moyen d'au moins un dispositif de piégeage approprié.

Dans un mode de réalisation particulier de la présente invention, le dispositif de piégeage comprend au moins un lit fluidisé d'un support solide. Le support solide peut être choisi dans le groupe constitué par les granulats, les agrégats, le verre, et leurs mélanges. Le support solide selon la présente invention est avantageusement un matériau granulaire, qui peut être minéral, organique, ou un mélange de matériaux minéraux et organiques. A titre d'exemple de support organique, peuvent être cités des supports à base de caoutchouc ou de polymères de recyclage du type polypropylène ou polyéthylène. Avantageusement selon la présente invention, le support solide est un matériau granulaire minéral, de préférence choisi dans le groupe constitué par l'alumine, la silice, la calcite. Dans un exemple de réalisation particulier de la présente invention, le support solide est un matériau granulaire microporeux, avantageusement minéral, tel que la zéolithe ou la pierre ponce. Les produits réactionnels générés au sein du réacteur à partir des entités radicalaires résultant de la dégradation des composés de fumées étant en général acides, le support solide selon l'invention possède avantageusement une forte capacité de neutralisation acide. Le support peut ainsi être un matériau basique, avantageusement minéral, tel que la pouzzolane ou une roche de type carbonate.

Avantageusement selon la présente invention, la dimension dudit support est comprise entre 0,5 mm et 20 mm, avantageusement entre 0,5 mm et 10 mm, encore plus avantageusement entre 1 mm et 10 mm.

Le dispositif de piégeage peut être chargé ou déchargé en continu, permettant ainsi d'assurer un traitement en continu des produits d'origine pétrolière à dégrader. Selon une caractéristique particulière de la présente invention, le dispositif de piégeage comprend au moins un lit fluidisé qui est un lit fixe ou circulant. Le lit fluidisé selon l'invention peut être ainsi un lit circulant, permettant l'injection continue des particules solides dans le fluide, et évitant tout risque d'agglomération des particules lors des dépôts du polymère piégé.

Avantageusement selon la présente invention, le dispositif de piégeage est agencé perpendiculairement à la direction du flux des fumées à traiter traversant le réacteur, de préférence au-dessus de la zone où est généré le plasma froid, i. e. au-dessus de la zone où est (sont) agencée(s) la (les) organes(s) de décharge diélectrique (3).

Dans un mode de réalisation particulier de la présente invention, une barrière de décharge diélectrique supplémentaire se trouve au voisinage de la sortie du réacteur, avantageusement placée perpendiculairement à la direction du flux des fumées traversant le réacteur, encore plus avantageusement au-dessus du dispositif de piégeage (5), afin de permettre un traitement complémentaire par rapport aux barrières de décharge diélectrique agencées à proximité des parois du réacteur qui s'étendent parallèlement à la direction du flux des fumées à traiter.

Avantageusement selon la présente invention, le procédé comprend en outre, à la sortie de réacteur, une étape de dégradation de l'ozone résiduel formé dans le réacteur par passage de l'air au travers de la (des) barrière(s) de décharge diélectrique. Cette étape de dégradation de l'ozone résiduel peut être réalisée à l'aide d'un filtre placé en sortie du réacteur, tel qu'une grille métallique, en particulier une grille de cuivre qui peut être portée à une température de l'ordre de 50°C à 70°C, typiquement autour de 60°C. Un autre moyen de filtrage, tel qu'un tissu de quartz, avantageusement placé en sortie de réacteur, peut quant à lui être utilisé comme moyen de piégeage de résidus de COV ou d'autres composés à dégrader.

Avantageusement selon la présente invention, le procédé peut en outre comprendre une recirculation, au moins partielle, des gaz purifiés situés dans le courant gazeux sortant du réacteur, soit vers l'entrée du réacteur, en mélange avec les fumées à traiter, soit vers la (les) barrière(s) de décharge diélectrique agencée(s) au voisinage des parois du réacteur.

Le dispositif selon la présente invention, qui convient à la mise en oeuvre du procédé selon l'invention, contient un réacteur (1) comprenant :
- au moins un système d'introduction (2) des fumées, avantageusement contenant un système Venturi, en partie basse du réacteur (1), avantageusement à la base du réacteur,
- au moins un organe de décharge diélectrique (3) agencé en remplacement d'au moins une partie d'au moins une des parois du réacteur (1) qui s'étendent parallèlement à la direction du flux des fumées traversant le réacteur,
- au moins un système d'introduction d'air (4) au travers dudit (desdits) organe(s) de décharge diélectrique,
- au moins un dispositif de piégeage (5) approprié à la rétention des produits réactionnels générés dans le réacteur, et
- au moins une cheminée de sortie (6).

Avantageusement selon la présente invention, le ou les organe(s) (3) de décharge diélectrique est (sont) réalisé(s) sous la forme de cassettes modulables constituées chacune par une pluralité de tubes électriques parallèles (7), lesdits tubes électriques étant chacun constitués de fils électriques (8), tels que des fils de cuivre, gainés d'un isolant diélectrique (9) et alimentés par un générateur de haute tension. La direction des tubes électriques parallèles (7) des cassettes peut être celle de l'axe vertical du réacteur (1), ou la direction perpendiculaire à l'axe vertical du réacteur (1).

Par le terme de « cassettes modulables », on entend au sens de la présente invention le fait que plusieurs cassettes peuvent être agencées sur au moins une paroi du réacteur - ou à la place d'au moins une partie d'au moins une paroi du réacteur - pour augmenter l'efficacité du procédé. Les cassettes sont ainsi avantageusement placées soit les unes derrière les autres, pour augmenter la puissance globale des cassettes, soit les unes au-dessus des autres pour augmenter les temps de séjour des fumées en contact du plasma généré au sein de réacteur.

Dans un mode de réalisation particulier de la présente invention, les fils électriques (8) sont reliés aux bords du cadre des cassettes qui sont avantageusement de forme carrée (figure 2). Typiquement, les cassettes selon la présente invention ont une superficie de 50 * 50 cm² ou de 20 * 20 cm², l'impédance des cassettes étant adaptée à la source électrotechnique de puissance (tension, fréquence, courant).

Les gaines d'isolant diélectrique (9) des tubes conducteurs (7) sont en général agencées autour des fils électriques (8), et permettent ainsi d'assurer une diffusion régulière du plasma au sein du réacteur (1), l'air s'ionisant sur les bords des diélectriques. Les barrières de décharge diélectrique se créent généralement dans les interstices compris entre les tubes électriques parallèles (7). L'isolant diélectrique peut être en quartz, en céramique ou en verre. Le diamètre du fil électrique (8) est avantageusement de l'ordre de 1 à 2 mm. La puissance du générateur de haute tension est typiquement de l'ordre de 1 à 20 kW, avantageusement entre 1 et 10 kW, encore plus avantageusement entre 5 et 10 kW. La tension d'un tel générateur est typiquement comprise entre 10 et 40 kV, et sa fréquence de 1 à 20 kHz.

Le diamètre de la gaine d'isolant diélectrique (9) est typiquement comprise entre 2 et 10 mm, avantageusement entre 2 et 8 mm, encore plus avantageusement entre 2 et 5 mm. L'espace compris entre les tubes électriques parallèles (7) est typiquement compris entre 1 et 2 mm.

Le dispositif selon la présente invention comprend avantageusement en outre au moins un moyen de filtrage (10, 11), en partie haute du réacteur (1), avant la cheminée de sortie (6), statique ou dynamique, qui peut être une grille métallique (11) telle qu'une grille en cuivre que l'on peut chauffer, notamment pour l'élimination de l'ozone résiduel, et/ou un filtre minéral tel qu'un filtre en fibre de verre ou en tissu de quartz (10), notamment pour piéger les COV résiduels.

Dans un mode de réalisation particulier selon la présente invention, le dispositif de piégeage (5) comprend au moins un lit fluidisé de matériaux granulaires. Le dispositif et le procédé selon la présente invention peuvent alors être utilisés pour la fabrication de granulats en vue de fabriquer un produit routier. Les granulats sont alors enrobés des produits réactionnels (en général de produits de type polymères) générés dans le réacteur à partir des entités radicalaires résultant de la dégradation des composés de fumées, et les granulats peuvent alors être réutilisés et recyclés pour des applications à vocation routière. Le dispositif et le procédé selon la présente invention peuvent ainsi être utilisés pour la fabrication d'un enrobé ou d'un enrobé bitumineux, en procédant au mélange de granulats enrobés tels qu'obtenus selon la présente invention avec un mélange à base de bitume.

L'exemple suivant est donné à titre non limitatif et illustre la présente invention.

### Exemple de réalisation de l'invention :

Un dispositif selon la présente invention comporte un réacteur (1) de base rectangulaire, muni d'un système d'introduction (2) des fumées avec Venturi, de deux organes de décharge diélectrique (3) remplaçant une partie de chaque paroi latérale du réacteur (1) et agencés parallèlement au flux gazeux, d'un système d'injection d'air sec (4) au travers desdits organes de décharge diélectrique, d'un dispositif de piégeage (5) constitué par un lit fluidisé d'un granulat en pouzzolane, d'un filtre minéral qui recueille les COV résiduels et d'une cheminée de sortie (6).

Un tel dispositif a été utilisé pour épurer des produits du type fumées de bitume contenant des COV, dont les teneurs de départ en effluents étaient de 5 kg/heure. Le fonctionnement du dispositif pendant 2 heures a permis d'éliminer 80 à 90 % des effluents sur le filtre minéral à partir d'un traitement approprié, avec un mélange gaz-COV et espèces excitées de la décharge par effet Venturi.

## Revendications

1. Procédé de traitement de fumées générées au cours de la fabrication, transformation et/ou manipulation de produits d'origine pétrolière portés à chaud, tels que des hydrocarbures, des bitumes et des enrobés bitumineux, **caractérisé en ce qu'**il implique :
- l'introduction desdites fumées dans un réacteur où les composants de fumées subissent une dégradation radicalaire par plasma froid généré dans le réacteur par introduction d'air au travers au moins une barrière de décharge diélectrique agencée à proximité d'au moins une des parois du réacteur qui s'étendent parallèlement à la direction du flux des fumées traversant le réacteur, et
- la rétention des produits réactionnels générés dans le réacteur à partir des entités radicalaires résultant de la dégradation des composants de fumées, au moyen d'au moins un dispositif de piégeage approprié.

2. Procédé selon la revendication 1, **caractérisé en ce que** l'introduction des fumées est réalisée par un courant vecteur d'air.

3. Procédé selon la revendication 1 ou 2, **caractérisé en ce qu'**au moins une barrière de décharge diélectrique est présente à proximité de chaque paroi latérale du réacteur.

4. Procédé selon l'une quelconque des revendications 1 à 3, **caractérisé en ce que** le dispositif de piégeage comprend au moins un lit fluidisé d'un support avantageusement minéral.

5. Procédé selon la revendication 4, **caractérisé en ce que** ledit support est un matériau granulaire contenant avantageusement de l'alumine, de la silice, ou de la calcite.

6. Procédé selon la revendication 4 ou 5, **caractérisé en ce que** ledit support est un matériau granulaire microporeux tel que la zéolithe ou la pierre ponce.

7. Procédé selon l'une quelconque des revendications 4 à 6, **caractérisé en ce que** ledit support est un matériau granulaire basique tel que la pouzzolane ou une roche de type carbonate.

8. Procédé selon l'une quelconque des revendications 4 à 7, **caractérisé en ce que** la dimension dudit support est comprise entre 0,5 mm et 20 mm, avantageusement entre 1 mm et 10 mm.

9. Procédé selon l'une quelconque des revendications 4 à 8, **caractérisé en ce que** le lit fluidisé est fixe ou circulant.

10. Procédé selon l'une quelconque des revendications précédentes, **caractérisé en ce qu'**une autre barrière de décharge diélectrique se trouve au voisinage de la sortie du réacteur, avantageusement placée perpendiculairement à la direction du flux des fumées traversant le réacteur.

11. Procédé selon l'une quelconque des revendications précédentes, **caractérisé en ce qu'**il comprend en outre, en sortie de réacteur, une étape de dégradation de l'ozone résiduel formé dans le réacteur par passage de l'air au travers de la (des) barrière(s) de décharge diélectrique.

12. Procédé selon l'une quelconque des revendications précédentes, **caractérisé en ce qu'**il comprend en outre une recirculation, au moins partielle, des gaz purifiés situés dans le courant gazeux sortant du réacteur vers l'entrée du réacteur, en mélange avec les fumées à traiter.

13. Dispositif de traitement de fumées générées au cours de la fabrication, transformation et/ou manipulation de produits d'origine pétrolière portés à chaud, tels que des hydrocarbures, des bitumes et des enrobés bitumineux, dans un réacteur (1) comprenant :
- au moins un système d'introduction (2) des fumées en partie basse du réacteur (1),
- au moins un organe de décharge diélectrique (3) en remplacement d'au moins une partie d'au moins une des parois du réacteur (1) qui s'étendent parallèlement à la direction du flux des fumées traversant le réacteur,
- au moins un système d'introduction d'air (4) au travers dudit (desdits) organe(s) de décharge diélectrique,
- au moins un dispositif de piégeage (5) approprié à la rétention des produits réactionnels générés dans le réacteur, et
- au moins une cheminée de sortie (6).

14. Dispositif selon la revendication 13, **caractérisé en ce que** le système d'introduction (2) des fumées contient un Venturi (2').

15. Dispositif selon la revendication 13 ou 14, **caractérisé en ce que** le ou les organe(s) (3) de décharge diélectrique est (sont) réalisé(s) sous la forme de cassettes modulables constituées chacune par une pluralité de tubes électriques parallèles (7), lesdits tubes électriques étant chacun constitués de fils électriques (8) gainés d'un isolant diélectrique (9) et alimentés par un générateur de haute tension.

16. Dispositif selon l'une quelconque des revendications 13 à 15, **caractérisé en ce que** les fils électriques (8) sont en cuivre.

17. Dispositif selon l'une quelconque des revendications 13 à 16, **caractérisé en ce que** l'isolant diélectrique (9) est en quartz, en céramique ou en verre.

18. Dispositif selon l'une quelconque des revendications 13 à 17, **caractérisé en ce que** le diamètre de la gaine d'isolant diélectrique (9) est compris entre 2 et 10 mm.

19. Dispositif selon l'une quelconque des revendications 13 à 18, **caractérisé en ce que** l'espace compris entre les tubes électriques parallèles (7) est compris entre 1 et 2 mm.

20. Dispositif selon l'une quelconque des revendications 13 à 19, **caractérisé en ce qu'**au moins un organe de décharge diélectrique (3) est présent en remplacement d'au moins une partie de chaque paroi latérale du réacteur (1), lesdits organes (3) étant avantageusement agencés selon une disposition en regard.

21. Dispositif selon l'une quelconque des revendications 13 à 20, **caractérisé en ce que** le dispositif de piégeage (5) comprend au moins un lit fluidisé d'un support avantageusement minéral.

22. Dispositif selon l'une quelconque des revendications 13 à 21, **caractérisé en ce qu'**il comprend en outre au moins un moyen de filtrage (10, 11), en partie haute du réacteur (1), avant la cheminée de sortie (6).

23. Dispositif selon l'une quelconque des revendications 13 à 22 **caractérisé en ce qu'**il comprend en outre au moins un organe (3) de décharge diélectrique, en partie haute du réacteur (1), avant la cheminée de sortie (6).

24. Utilisation du procédé selon l'une quelconque des revendications 4 à 9 ou du dispositif selon la revendication 21, dans lesquels le dispositif de piégeage (5) comprend au moins un lit fluidisé de matériaux granulaires, dans la préparation d'un granulat entrant dans la fabrication d'un produit routier.

25. Utilisation selon la revendication 24, **caractérisée en ce que** le produit routier est un enrobé ou un enrobé bitumineux.

## Claims

1. Method for treating fumes generated during the production, conversion and/or handling of heated products of petroleum origin, such as hydrocarbons, asphalts and bituminous hot mixes, **characterized in that** it implies:
- the introduction of said fumes into a reactor in which the fume components undergo free radical degradation by cold plasma generated in the reactor by the introduction of air through at least one dielectric barrier discharge arranged close to at least one of the reactor walls which extend parallel to the flow direction of the fumes passing through the reactor, and
- the retention of the reaction products generated in the reactor from the free radical entities resulting from the degradation of the fume components, using at least one appropriate trapping device.

2. Method according to Claim 1, **characterized in that** the fumes are introduced by a carrier air stream.

3. Method according to either of Claims 1 and 2, **characterized in that** at least one dielectric barrier discharge is present close to each side wall of the reactor.

4. Method according to any one of Claims 1 to 3, **characterized in that** the trapping device comprises at least one fluidized bed of a medium advantageously mineral.

5. Method according to Claim 4, **characterized in that** said medium is a granular material advantageously containing alumina, silica, or calcite.

6. Method according to either of Claims 4 and 5, **characterized in that** said medium is a microporous granular material such as zeolite or pumice.

7. Method according to any one of Claims 4 to 6, **characterized in that** said medium is a basic granular material such as pozzolan or a carbonate type rock.

8. Method according to any one of Claims 4 to 7, **characterized in that** the size of said medium is between 0.5 mm and 20 mm, advantageously between 1 mm and 10 mm.

9. Method according to any one of Claims 4 to 8, **characterized in that** the fluidized bed is fixed or circulating.

10. Method according to any one of the preceding claims, **characterized in that** another dielectric barrier discharge is located close to the reactor outlet, advantageously placed perpendicular to the flow direction of the fumes passing through the reactor.

11. Method according to any one of the preceding claims, **characterized in that** it further comprises, at the reactor outlet, a step of degradation of the residual ozone formed in the reactor by the passage of the air through the dielectric barrier discharge(s).

12. Method according to any one of the preceding claims, **characterized in that** it further comprises an at least partial recirculation of the purified gases located in the gas stream leaving the reactor to the reactor inlet, in a mixture with the fumes to be treated.

13. Device for treating fumes generated during the production, conversion and/or handling of heated products of petroleum origin, such as hydrocarbons, asphalts and bituminous hot mixes, in a reactor (1) comprising:
- at least one fume introduction system (2) in the lower part of the reactor (1),
- at least one dielectric discharge member (3) replacing at least part of at least one of the reactor walls (1) which extend parallel to the flow direction of the fumes passing through the reactor,
- at least one system for introducing air (4) through said dielectric discharge member(s),
- at least one appropriate trapping device (5) for retaining the reaction products generated in the reactor, and
- at least one discharge stack (6).

14. Device according to Claim 13, **characterized in that** the fume introduction system (2) contains a Venturi (2').

15. Device according to either of Claims 13 and 14, **characterized in that** the dielectric discharge member(s) (3) is (are) made in the form of modulable cassettes each consisting of a plurality of parallel electric tubes (7), said electric tubes each consisting of electric wires (8) sheathed in a dielectric insulation (9) and supplied by a high voltage generator.

16. Device according to any one of Claims 13 to 15, **characterized in that** the electric wires (8) are of copper.

17. Device according to any one of Claims 13 to 16, **characterized in that** the dielectric insulation (9) is of quartz, ceramic or glass.

18. Device according to any one of Claims 13 to 17, **characterized in that** the diameter of the dielectric insulation sheath (9) is between 2 and 10 mm.

19. Device according to any one of Claims 13 to 18, **characterized in that** the space between the parallel electric tubes (7) is between 1 and 2 mm.

20. Device according to any one of Claims 13 to 19, **characterized in that** at least one dielectric discharge member (3) is present to replace at least one part of each side wall of the reactor (1), said members (3) being advantageously arranged in a face-to-face layout.

21. Device according to any one of Claims 13 to 20, **characterized in that** the trapping device (5) comprises at least one fluidized bed of a medium advantageously mineral.

22. Device according to any one of Claims 13 to 21, **characterized in that** it further comprises at least one way to filter (10, 11) in the upper part of the reactor (1) before the discharge stack (6).

23. Device according to any one of Claims 13 to 22, **characterized in that** it further comprises at least one dielectric discharge member (3), in the upper part of the reactor (1), before the discharge stack (6).

24. Use of the method according to any one of Claims 4 to 9 or of the device according to Claim 21, in which the trapping device (5) comprises at least one fluidized bed of granular materials, in the preparation of an aggregate used in the production of a roadbuilding material.

25. Use according to Claim 24, **characterized in that** the roadbuilding product is a hot mix or a bituminous mix.

## Patentansprüche

1. Verfahren zum Behandeln von Abgasen, die während der Herstellung, Verarbeitung und/oder Handhabung von erhitzten Produkten auf Erdölbasis, wie etwa Kohlenwasserstoffen, Erdölpech und bituminiertem Zuschlag, erzeugt werden, **dadurch gekennzeichnet, dass** es folgende Schritte umfasst:
- Einführen der Abgase in einen Reaktor, wo die Bestandteile der Abgase einen radikalischen Abbau durch Kaltplasma erfahren, das in dem Reaktor durch eine Einführung von Luft durch mindestens eine dielektrische Entladungssperre hindurch erzeugt wird, die in der Nähe von mindestens einer der Wände des Reaktors angeordnet ist, die sich parallel zur Richtung des Flusses der den Reaktor durchquerenden Abgase erstrecken, und
- Zurückhalten der Reaktionsprodukte, die in dem Reaktor aus den radikalischen Einheiten, die sich aus dem Abbau der Abgasbestandteile ergeben, erzeugt werden, mittels mindestens einer geeigneten Fangvorrichtung.

2. Verfahren nach Anspruch 1, **dadurch gekennzeichnet, dass** das Einführen der Abgase durch einen Luft tragenden Strom ausgeführt wird.

3. Verfahren nach Anspruch 1 oder 2, **dadurch gekennzeichnet, dass** mindestens eine dielektrische Entladungssperre in der Nähe jeder Seitenwand des Reaktors vorliegt.

4. Verfahren nach einem der Ansprüche 1 bis 3, **dadurch gekennzeichnet, dass** die Fangvorrichtung mindestens ein Wirbelbett eines vorteilhaft mineralischen Trägers umfasst.

5. Verfahren nach Anspruch 4, **dadurch gekennzeichnet, dass** der Träger ein körniges Material ist, das vorteilhaft Aluminiumoxid, Kieselerde oder Kalkspat enthält.

6. Verfahren nach Anspruch 4 oder 5, **dadurch gekennzeichnet, dass** der Träger ein mikroporöses körniges Material ist, wie etwa Siedestein oder Bimsstein.

7. Verfahren nach einem der Ansprüche 4 bis 6, **dadurch gekennzeichnet, dass** der Träger ein basisches körniges Material ist, wie etwa Puzzolanerde oder ein carbonatartiges Gestein.

8. Verfahren nach einem der Ansprüche 4 bis 7, **dadurch gekennzeichnet, dass** die Abmessung des Trägers zwischen 0,5 mm und 20 mm, vorteilhaft zwischen 1 mm und 10 mm, liegt.

9. Verfahren nach einem der Ansprüche 4 bis 8, **dadurch gekennzeichnet, dass** das Wirbelbett feststehend oder umlaufend ist.

10. Verfahren nach einem der vorhergehenden Ansprüche, **dadurch gekennzeichnet, dass** sich eine andere dielektrische Entladungssperre in der Nähe des Ausgangs des Reaktors, vorteilhaft rechtwinklig zur Richtung des Flusses der den Reaktor durchquerenden Abgase angeordnet, befindet.

11. Verfahren nach einem der vorhergehenden Ansprüche, **dadurch gekennzeichnet, dass** es ferner am Ausgang des Reaktors einen Schritt zum Abbauen des restlichen Ozons umfasst, das im Reaktor durch den Durchgang der Luft durch die dielektrische(n) Entladungsbarriere(n) hindurch gebildet wird.

12. Verfahren nach einem der vorhergehenden Ansprüche, **dadurch gekennzeichnet, dass** es ferner eine zumindest teilweise Rückführung der Reingase, die sich in dem Gasstrom befinden, der aus dem Reaktor austritt, zum Eingang des Reaktors hin, in einer Mischung mit den zu behandelnden Abgasen, umfasst.

13. Vorrichtung zum Behandeln von Abgasen, die während der Herstellung, Verarbeitung und/oder Handhabung von erhitzten Produkten auf Erdölbasis, wie etwa Kohlenwasserstoffen, Erdölpech und bituminiertem Zuschlag, in einem Reaktor (1) erzeugt werden, umfassend:
- mindestens ein System (2) zum Einführen der Abgase in den unteren Teil des Reaktors (1),
- mindestens ein Organ (3) zum dielektrischen Entladen als Ersatz für mindestens einen Teil mindestens einer der Wände des Reaktors (1), die sich parallel zur Richtung des Flusses der den Reaktor durchquerenden Abgase erstrecken,
- mindestens ein System (4) zum Einführen von Luft durch das bzw. die dielektrische(n) Entladungsorgan(e) hindurch,
- mindestens eine Fangvorrichtung (5), die dazu geeignet ist, die Reaktionsprodukte zurückzuhalten, die in dem Reaktor erzeugt werden, und
- mindestens einen Ausgangsrauchabzug (6).

14. Vorrichtung nach Anspruch 13, **dadurch gekennzeichnet, dass** das System (2) zum Einführen der Abgase ein Venturirohr (2') umfasst.

15. Vorrichtung nach Anspruch 13 oder 14, **dadurch gekennzeichnet, dass** das bzw. die Organ(e) (3) zum dielektrischen Entladen als modulare Kassetten ausgeführt ist/sind, die jeweils durch eine Vielzahl von parallelen elektrischen Röhren (7) gebildet werden, wobei die elektrischen Röhren jeweils aus elektrischen Drähten (8) gebildet werden, die mit einem dielektrischen Isolierstoff (9) umhüllt sind und von einem Hochspannungsgenerator gespeist werden.

16. Vorrichtung nach einem der Ansprüche 13 bis 15, **dadurch gekennzeichnet, dass** die elektrischen Drähte (8) aus Kupfer bestehen.

17. Vorrichtung nach einem der Ansprüche 13 bis 16, **dadurch gekennzeichnet, dass** der dielektrische Isolierstoff (9) aus Quarz, Keramik oder Glas besteht.

18. Vorrichtung nach einem der Ansprüche 13 bis 17, **dadurch gekennzeichnet, dass** der Durchmesser der dielektrischen Isolierhülle (9) zwischen 2 und 10 mm liegt.

19. Vorrichtung nach einem der Ansprüche 13 bis 18, **dadurch gekennzeichnet, dass** der Zwischenraum, der zwischen den parallelen elektrischen Röhren (7) liegt, zwischen 1 und 2 mm liegt.

20. Vorrichtung nach einem der Ansprüche 13 bis 19, **dadurch gekennzeichnet, dass** mindestens ein dielektrisches Entladungsorgan (3) vorhanden ist als Ersatz mindestens eines Teils jeder Seitenwand des Reaktors (1), wobei die Organe (3) vorteilhaft in einer gegenüberliegenden Anordnung angeordnet sind.

21. Vorrichtung nach einem der Ansprüche 13 bis 20, **dadurch gekennzeichnet, dass** die Fangvorrichtung (5) mindestens ein Wirbelbett eines vorteilhaft mineralischen Trägers umfasst.

22. Vorrichtung nach einem der Ansprüche 13 bis 21, **dadurch gekennzeichnet, dass** sie ferner mindestens ein Filtermittel (10, 11) umfasst, im oberen Teil des Reaktors (1), vor dem Ausgangsrauchabzug (6).

23. Vorrichtung nach einem der Ansprüche 13 bis 22, **dadurch gekennzeichnet, dass** sie ferner mindestens ein Organ (3) zum dielektrischen Entladen umfasst, im oberen Teil des Reaktors (1), vor dem Ausgangsrauchabzug (6).

24. Verwendung des Verfahrens nach einem der Ansprüche 4 bis 9 oder der Vorrichtung nach Anspruch 21, wobei die Fangvorrichtung (5) mindestens ein Wirbelbett aus körnigen Materialien umfasst, zur Vorbereitung eines Granulats, das in die Herstellung eines Straßenprodukts einfließt.

25. Verwendung nach Anspruch 24, **dadurch gekennzeichnet, dass** das Straßenprodukt ein Zuschlag oder ein bituminierter Zuschlag ist.
